# EUROPEAN PATENT APPLICATION

(11) **EP 4 668 545 A1**
(43) Date of publication of application: **24.12.2025**
(21) Application number: 23932856.0
(22) Date of filing: 22.12.2023
(51) Int. Cl.: H02K 1/276, H02K 21/02, H02K 21/46

(54) **PERMANENT-MAGNET-ASSISTED SYNCHRONOUS RELUCTANCE MOTOR**

(30) Priority: 10.04.2023 CN 202310383629
(71) Applicant: Gree Electric Appliances, Inc. of Zhuhai, Zhuhai, Guangdong 519070 (CN)
(72) Inventor: HU, Yusheng, Zhuhai, Guangdong 519070 (CN); CHEN, Bin, Zhuhai, Guangdong 519070 (CN); XIAO, Yong, Zhuhai, Guangdong 519070 (CN); SHI, Jinfei, Zhuhai, Guangdong 519070 (CN); LI, Xia, Zhuhai, Guangdong 519070 (CN); LI, Ying, Zhuhai, Guangdong 519070 (CN)
(74) Representative: Zacco GmbH
(86) International application number: PCT/CN2023/141284
(87) International publication number: WO 2024/212585

(57) **Abstract**

The present invention provides a permanent magnet assisted synchronous reluctance motor. The permanent magnet assisted synchronous reluctance motor comprises a stator structure and a rotor structure. The stator structure is sleeved outside the rotor structure and forms an air gap with the rotor structure. The rotor structure comprises a rotor core. The stator structure includes a stator core having uniformly distributed thereon a plurality of alternately arranged stator teeth and stator slots. When any d-axis centerline of the rotor structure is aligned with a stator tooth centerline of the stator structure, a d-axis centerline adjacent to the d-axis centerline is aligned with a stator slot centerline, and a q-axis centerline adjacent to the d-axis centerline is staggered with the stator tooth centerline or the stator slot centerline. The permanent magnetpermanent magnet assisted synchronous reluctance motor according to the present invention can effectively reduce the cogging effect, reduce the noise and harmonic loss, and improve the motor efficiency.

## Description

This application claims priority to Chinese Patent Application No. 202310383629.8, titled "PERMANENT MAGNET ASSISTED SYNCHRONOUS RELUCTANCE MOTOR", filed on April 10, 2023.

### Technical Field

The present invention relates to the field of motor technologies, and in particular, to a permanent magnet assisted synchronous reluctance motor.

### Background

A self-starting permanent magnet assisted synchronous reluctance motor is developed upon a permanent magnet assisted synchronous reluctance motor by incorporating the advantages of an asynchronous motor. It utilizes asynchronous torques generated by rotor bars to achieve self-starting, while employing both magnet steel torques and reluctance torques to achieve constant speed operation.

Compared with an asynchronous motor, the self-starting permanent magnet assisted reluctance motor operates at a synchronous speed without rotor copper loss during normal working, and thus has high efficiency. Magnet steels are able to provide a strong magnetic field, so higher power is able to be output under the same specification, thereby achieving a higher power density. The self-starting permanent magnet assisted reluctance motor has rotor windings assembled on the rotor thereof and thus retains the asynchronous starting capability of an asynchronous motor, so that it is able to functionally replace the asynchronous motor.

Compared with an asynchronous-start magnet steel synchronous motor, the self-starting permanent magnet assisted reluctance motor uses less magnet steels and thus is low-cost. However, the rotor of the self-starting permanent magnet assisted synchronous reluctance motor has a plurality of magnetic conduction channels, which results in large magnetic field and input current harmonic of the motor, leading to significant electromagnetic vibration noise in the motor.

### Summary

The present invention discloses a permanent magnet assisted synchronous reluctance motor which is able to effectively reduce the cogging effect, reduce the noise and harmonic loss, and improve the motor efficiency.

To achieve the objective hereinabove, according to an aspect of the present invention, provided is a permanent magnet assisted synchronous reluctance motor, including a stator structure and a rotor structure, the stator structure being sleeved outside the rotor structure and forming an air gap with the rotor structure;
wherein the rotor structure includes:
a rotor core including a plurality of axially stacked magnetic conductive laminations , a plurality of conductor slots and a plurality of layers of permanent magnet slots being formed under one pole of the rotor core and the plurality of conductor slots being distributed along an outer periphery of the rotor core ; and
magnet steels disposed in the plurality of layers of the permanent magnet slots ;
the rotor core includes a d-axis and a q-axis; under one pole, the d-axis is located on a symmetric centerline of the pole and the q-axis is located on a symmetric centerline between two adjacent poles; the plurality of layers of the permanent magnet slots are arranged at intervals along the d-axis; the plurality of conductor slots include d-axis conductor slots and q-axis conductor slots ; the d-axis conductor slots are located on a side of the magnet steels close to a rotor outer circumference of the rotor core , and the q-axis conductor slots are located at two ends of each of the plurality of layers of the permanent magnet slots and extend along an extension direction of the ends of each of the plurality of layers of the permanent magnet slots close to the q-axis conductor slots ;
the stator structure includes a stator core being provided with a plurality of stator teeth and stator slots which are uniformly distributed in an alternating arrangement; and when any d-axis centerline of the rotor structure is aligned with a stator tooth centerline of the stator structure , a d-axis centerline adjacent to the d-axis centerline is aligned with a stator slot centerline, and a q-axis centerline adjacent to the d-axis centerline is staggered with the stator tooth centerline or the stator slot centerline.

In some embodiments, the q-axis conductor slots have a length L2 along the q-axis and a width w2 along a direction perpendicular to the q-axis; along a direction away from the q-axis, L2 decreases gradually and a ratio L2/w2 of L2 to w2 decreases gradually; a relationship between the length L2 of at least part of the q-axis conductor slots along the q-axis and a radius R of the rotor outer circumference meets 0.15≤L2/R≤0.35.

In some embodiments, 3≤L2/w2≤7.

In some embodiments, the magnet steels have a width w1 along the d-axis; and a relationship between a width w2 of two q-axis conductor slots in the q-axis conductor slots along a direction perpendicular to the q-axis and a width w1 of a corresponding magnet steel on a same layer along the d-axis meets w2>w1.

In some embodiments, a relationship between w1 and w2 meets 1.2≤w2/w1≤2.

In some embodiments, a minimum width of a magnetic conduction channel between two q-axis conductor slots adjacent to the q-axis in the direction perpendicular to the q-axis is q1, a minimum value of widths of magnetic conduction channels between all the adjacent q-axis conductor slots on a same side of the q-axis in the direction perpendicular to the q-axis is qz, and q1<qz.

In some embodiments, under the same pole, along a direction away from the q-axis, widths of magnetic conduction channels in the direction perpendicular to the q-axis decrease gradually.

In some embodiments, under the same pole, a magnetic conduction channel between adjacent q-axis conductor slots has a minimum width qn in the direction perpendicular to the q-axis, a magnetic conduction channel between adjacent permanent magnet slots corresponding to the adjacent q-axis conductor slots has a minimum width dz along the d-axis, and 0.9qnsdz≤1.35qn.

In some embodiments, under the same pole, a number of the d-axis conductor slots located on the side of the magnet steels close to the rotor outer circumference is at least two, and a total length L5 of all the d-axis conductor slots in a direction perpendicular to the d-axis is greater than a length L1 of each of the magnet steels in the direction perpendicular to the d-axis.

In some embodiments, 1.2≤L5/L1≤2.

In some embodiments, a spacing between two adjacent d-axis conductor slots in the direction perpendicular to the d-axis is w4, and a width of each of the magnet steels along the d-axis is w1, with w4 ≥ 2w1; and/or, a relationship between a maximum width w5 of the d-axis conductor slots in the d-axis and the width w1 of each of the magnet steels along the d-axis satisfies w5 ≥ 2w1.

In some embodiments, in a cross-section perpendicular to a central axis of the rotor core , the plurality of layers of the permanent magnet slots are symmetric about the d-axis, each of the plurality of layers of permanent magnet slots includes an arc segment and/or a straight segment and includes a middle portion perpendicular to the d-axis and two end portions parallel to the q-axis, each of the magnet steels is disposed in a middle portion of a corresponding permanent magnet slot , and portions of the corresponding permanent magnet slot at two ends of the each of the magnet steels are filled with air.

In some embodiments, a width of part of the middle portion at two ends of a corresponding magnet steel gradually increases from two ends of the corresponding magnet steel in a direction away from the corresponding magnet steel toward a junction with the two end portions to reach a width of the two end portions at the junction.

In some embodiments, a maximum width of the two end portions in the direction perpendicular to the q-axis is w5, wherein a relationship between w2 and w5 meets 0.8w2≤w6≤1.1w2.

In some embodiments, an air portion of each of the plurality of the permanent magnet slots at an end of a corresponding magnet steel has a length L3 in the direction perpendicular to the d-axis, each q-axis conductor slot on the same layer has a length L2 along the q-axis, and a ratio of L3 to L2 decreases gradually along a direction toward the rotor outer circumference.

In some embodiments, a length L3 of an air portion of at least a permanent magnet slot at an innermost layer at the end of the corresponding magnet steel is greater than the length L2 of the q-axis conductor slot on the same layer along the q-axis.

In some embodiments, a length L3 of an air portion of a permanent magnet slot at an outermost layer along the d-axis at the end of the corresponding magnet steel is less than the length L2 of the q-axis conductor slot on the same layer along the q-axis.

In some embodiments, 0.35≤L3/L250.8.

In some embodiments, each of the magnet steels has a length L1 in the direction perpendicular to a d-axis, a corresponding permanent magnet slot on a same layer as the each of the magnet steels has a total length L4 in the direction perpendicular to the d-axis, and a ratio k4 of L1 to L4 increases gradually along a direction toward the rotor outer circumference.

In some embodiments, a ratio k4 between a length L1 of a magnet steel at an innermost layer along the d-axis and a length L4 of a corresponding permanent magnet slot on the same layer meets 0.2≤k4≤0.4, and along the direction toward the rotor outer circumference, an increase ratio of k4 for an adjacent layer is greater than or equal to 1.25.

In some embodiments, the rotor structure further includes a short-circuit end ring which covers and short-circuits the conductor slots ; the short-circuit end ring has a circular outer periphery and includes an end ring inner hole which is a polygon defined by straight segments or a polygon defined by straight segments and arc segments; under the same pole, the short-circuit end ring has different radial widths at different positions of a region from the d-axis to the q-axis; and a relationship between a minimum radial width r2 of the short-circuit end ring and a radius R of the rotor outer circumference meets 0.14≤r2/R≤0.3.

With the technical solutions of the present invention, the permanent magnet assisted synchronous reluctance motor includes a stator structure and a rotor structure. The stator structure is sleeved outside the rotor structure and forms an air gap with the rotor structure. The rotor structure includes: a rotor core including a plurality of axially stacked magnetic conductive laminations, a plurality of conductor slots and a plurality of permanent magnet slots being formed under one pole of the rotor core and the conductor slots being distributed along an outer periphery of the rotor core; and magnet steels disposed in the permanent magnet slots. The rotor core includes a d-axis and a q-axis. Under one pole, the d-axis is located on a symmetric centerline of the pole and the q-axis is located on a symmetric centerline between two adjacent poles; the plurality of layers of the permanent magnet slots are arranged at intervals along the d-axis; the plurality of conductor slots include d-axis conductor slots and q-axis conductor slots ; the d-axis conductor slots are located on a side of the magnet steels close to a rotor outer circumference of the rotor core , and the q-axis conductor slots are located at two ends of each of the plurality of layers of the permanent magnet slots and extend along an extension direction of the ends of each of the plurality of layers of the permanent magnet slots close to the q-axis conductor slots. The stator structure includes a stator core being provided with a plurality of stator teeth and stator slots which are uniformly distributed in an alternating arrangement; and when any d-axis centerline of the rotor structure is aligned with a stator tooth centerline of the stator structure , a d-axis centerline adjacent to the d-axis centerline is aligned with a stator slot centerline, and a q-axis centerline adjacent to the d-axis centerline is staggered with the stator tooth centerline or the stator slot centerline. By setting the relationships of the d-axis centerline with the stator slot centerline and the stator tooth centerline, the positional relationship between the q-axis conductor slots and the stator tooth slots are able to be changed, thereby reducing cogging harmonics, improving the sinusoidal quality of the current waveform, reducing noise and harmonic losses, and enhancing motor efficiency.

### Brief Description of the Drawings

The drawings of the description constituting part of the present invention serve to provide a further understanding of the present invention. Exemplary embodiments of the present invention and description thereof are used to explain the present invention, and do not constitute improper limitation to the present invention. In the drawings:
FIG. 1 shows a structural dimension diagram of a rotor structure according to an embodiment of the present invention;
FIG. 2 shows a curve of a relationship between L2 / w2 and pull-in torque of a rotor structure according to an embodiment of the present invention;
FIG. 3 shows a schematic diagram of improvement of magnet steel demagnetization by an asynchronous magnetic field in a rotor structure according to an embodiment of the present invention;
FIG. 4 shows a curve of a relationship between remanence of magnet steels and w2 / w1 in a rotor structure according to an embodiment of the present invention;
FIG. 5 shows curves of a relationship between magnetic flux density of magnet steels in each layer and L5 / L1 in a rotor structure according to an embodiment of the present invention;
FIG. 6 shows a comparison diagram of magnetic flux densities of magnet steels between a motor according to an embodiment of the present invention and a motor of the related art;
FIG. 7 shows curves of a relationship between utilization rate of magnet steels in each layer and L3 / L1 in a rotor structure according to an embodiment of the present invention;
FIG. 8 shows a comparison diagram of temperature rise of magnet steels under different operating conditions between a motor according to an embodiment of the present invention and a motor of the related art;
FIG. 9 shows a magnetic flux density cloud diagram of magnet steels under heavy load in a rotor structure according to an embodiment of the present invention;
FIG. 10 shows a magnetic flux density cloud diagram of magnet steels under heavy load in a rotor structure of the prior art;
FIG. 11 shows a schematic structural diagram of a short-circuit end ring without an end plate in a rotor structure according to an embodiment of the present invention;
FIG. 12 shows an exploded schematic structural diagram of a short-circuit end ring without an end plate in a rotor structure according to an embodiment of the present invention;
FIG. 13 shows a first mating structure diagram between an end plate and a rotor core in a rotor structure according to an embodiment of the present invention;
FIG. 14 shows a second mating structure diagram between an end plate and a rotor core of a rotor structure according to an embodiment of the present invention;
FIG. 15 shows a mating structure diagram of a first end plate, a first end ring, and a rotor core in a rotor structure according to an embodiment of the present invention;
FIG. 16 shows a mating structure diagram of a second end plate, a second end ring, and a rotor core in a rotor structure according to an embodiment of the present invention;
FIG. 17 shows an exploded schematic structural diagram of a short-circuit end ring with an end plate in a rotor structure according to an embodiment of the present invention;
FIG. 18 shows a schematic structural diagram of a rotor structure according to another embodiment of the present invention;
FIG. 19 shows curves of a relationship between minimum torque and pull-in torque with respect to r1 / R in a rotor structure according to an embodiment of the present invention;
FIG. 20 shows a schematic diagram of a mating structure between a rotor structure and a stator structure of a motor according to an embodiment of the present invention;
FIG. 21 shows a comparison diagram of rotational speed curves during starting process between a motor according to an embodiment of the present invention and a motor of the related art;
FIG. 22 shows a comparison diagram of magnetic flux density of magnet steels during starting process between a motor according to an embodiment of the present invention and a motor of the related art;
FIG. 23 shows a comparison diagram of various torques between a motor according to an embodiment of the present invention and a motor of the related art;
FIG. 24 shows a comparison diagram of back electromotive force waveforms between a motor according to an embodiment of the present invention and a motor of the related art;
FIG. 25 shows a comparison diagram of current waveforms between a motor according to an embodiment of the present invention and a motor of the related art; and
FIG. 26 shows a comparison diagram of harmonic amplitudes between a motor according to an embodiment of the present invention and a motor of the related art.

The drawings hereinabove include the following reference numerals:
1, rotor structure; 2, rotor core; 3, magnetic conductive lamination; 4, conductor slot; 41, q-axis conductor slot; 42, d-axis conductor slot; 5, permanent magnet slot; 6, magnet steel; 7, rotor shaft hole; 8, stator structure; 9, short-circuit end ring; 101, first end plate; 102, second end plate; 111, first end ring; and 112, second end ring.

### Detailed Description of the Embodiments

It should be noted that the embodiments and the features of the embodiments in the present invention can be combined with each other under the circumstances that there is no conflict. The present invention will be illustrated below in detail with reference to the drawings and in combination with the embodiments.

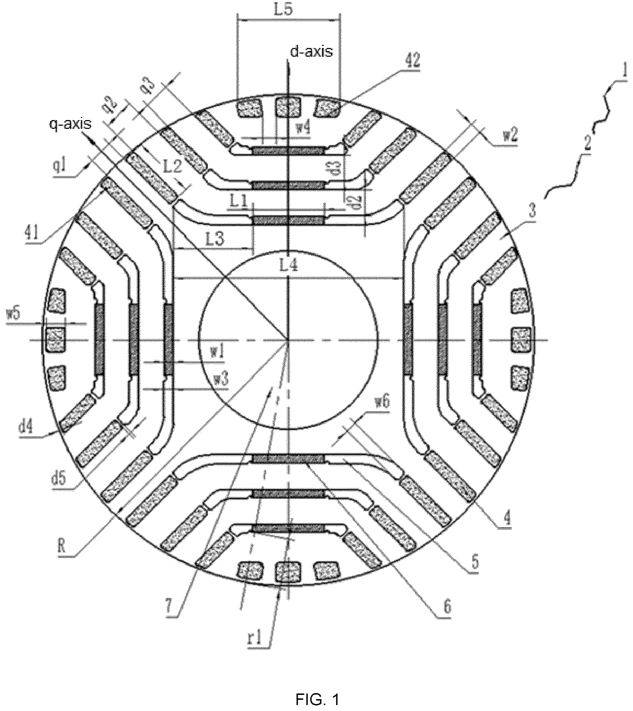

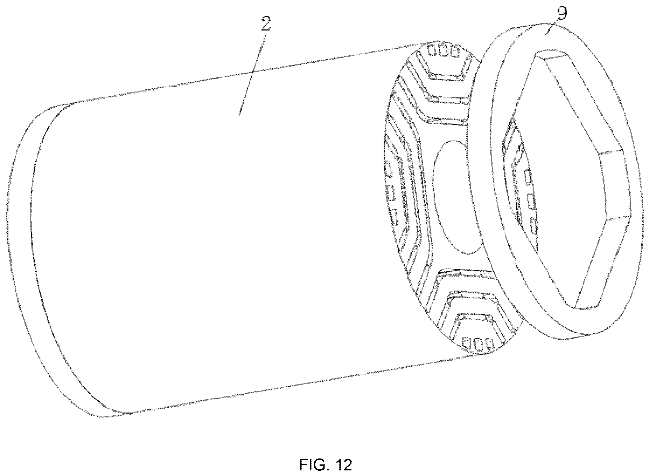

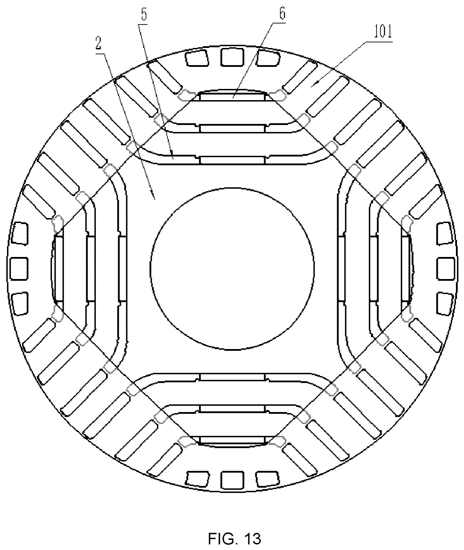

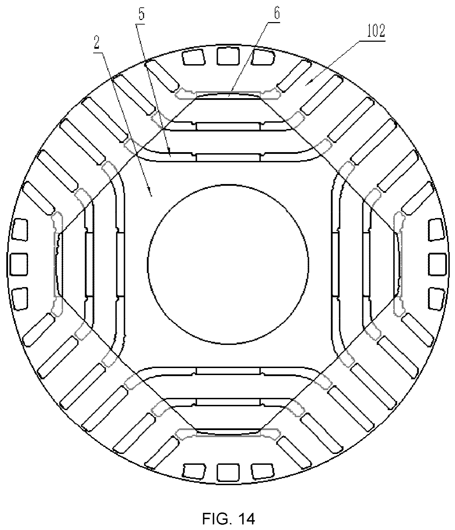

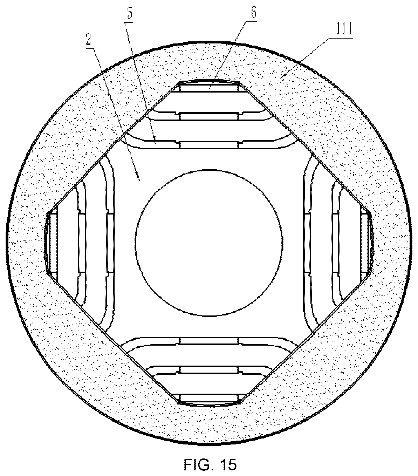

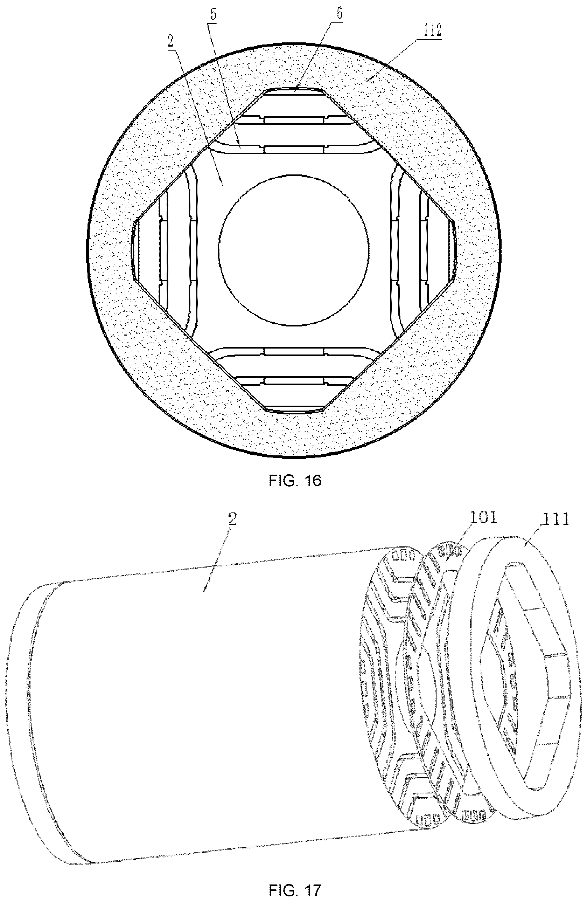

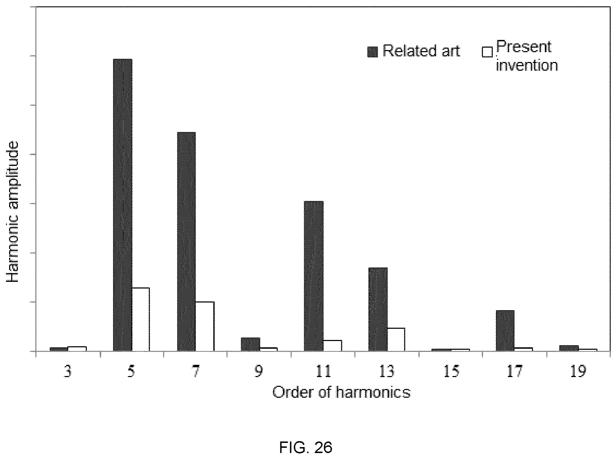

With reference to FIGs. 1 to 26, according to embodiments of the present invention, a motor includes a stator structure 8 and a rotor structure 1. The rotor structure 1 is the rotor structure described hereinabove and the stator structure 8 is sleeved outside the rotor structure.

The rotor structure includes: a rotor core 2 including a plurality of axially stacked magnetic conductive laminations 3, a plurality of conductor slots 4 and a plurality of permanent magnet slots 5 being formed under one pole of the rotor core 2 and the conductor slots 4 being distributed along an outer periphery of the rotor core 2; and magnet steels 6 disposed in the permanent magnet slots 5. The rotor core 2 includes a d-axis and a q-axis. Under one pole, the d-axis is located on a symmetric centerline of the pole and the q-axis is located on a symmetric centerline between two adjacent poles. The permanent magnet slots 5 are arranged at intervals along the d-axis. The conductor slots 4 include d-axis conductor slots 42 and q-axis conductor slots 41. The d-axis conductor slots 42 are located on a side of the magnet steels 6 close to a rotor outer circumference of the rotor core 2, and the q-axis conductor slots 41 are located at two ends of the permanent magnet slots 5 and extend along an extension direction of ends of the permanent magnet slots 5 close to the q-axis conductor slots 41.

A stator core is provided with a plurality of stator teeth and stator slots which are uniformly distributed in an alternating arrangement. When any d-axis centerline of the rotor structure 1 is aligned with a stator tooth centerline of the stator structure 8, d-axis centerlines adjacent to the d-axis centerline aligned with the stator tooth centerline of the stator structure 8 is aligned with a stator slot centerline, and q-axis centerlines adjacent to the d-axis centerline are staggered with the stator tooth centerline or the stator slot centerline.

By setting the relationships of the d-axis centerline with the stator slot centerline and the stator tooth centerline, the positional relationship between the q-axis conductor slots and the stator tooth slots are able to be changed, thereby reducing cogging harmonics, improving the sinusoidal quality of the current waveform, reducing noise and harmonic losses, and enhancing motor efficiency.

In one embodiment, within a cross section perpendicular to a central axis of the rotor core, each of the q-axis conductor slots 41 has a length L2 along the q-axis and a width w2 along a direction perpendicular to the q-axis; along a direction away from the q-axis, L2 decreases gradually and a ratio L2/w2 of L2 to w2 decreases gradually; a relationship between the length L2 of at least part of the q-axis conductor slots 41 along the q-axis and a radius R of the rotor outer circumference satisfies 0.15≤L2/R≤0.35.

A squirrel-cage asynchronous magnetic field generated by the conductor slots has a shielding effect on the demagnetizing field of an armature winding. To be specific, the squirrel-cage magnetic field provides protection for the magnet steels. By defining the ratio relationship between the length of the conductor slots and the radius of the rotor outer circumference, on the one hand, the area of the conductor slots is able to be increased without affecting the arrangement of the magnetic conduction channels, thereby increasing the pull-in torque of the motor and improving the starting capability of the motor. On the other hand, the protective effect of the squirrel-cage magnetic field on the magnet steels is able to be enhanced, improving the anti-demagnetization capability of the magnet steels. The rotor structure both ensure a certain area of conductor slots and reasonable arrangement of magnetic conduction channels by defining the ratio relationship between the length and width of the conductor slots and the ratio between the length of the conductor slots and the radius of the rotor outer circumference. The certain area of conductor slots is able to increase the pull-in torque of the motor and improve the starting capability of the motor, while the reasonable arrangement of magnetic conduction channels is able to avoid magnetic saturation of the rotor, increase the magnet steel torque and reluctance torque of the motor, and enhance the motor efficiency.

In one embodiment, 3≤L2/w2≤7. By limiting the range of L2/w2, the ratio relationship between the length and width of the q-axis conductor slots 41 is able to be optimized such that the relationship between the length and width of the q-axis conductor slots 41 is set reasonably. On the basis of ensuring a sufficient area of conductor slots, the design of the length and width of the q-axis conductor slots 41 enables the formation of magnetic conduction channels with more superior dimensional design such that the pull-in torque of the motor and the comprehensive performance of the magnetic conductivity capability of the magnetic conduction channels are optimal, thereby achieving better motor efficiency.

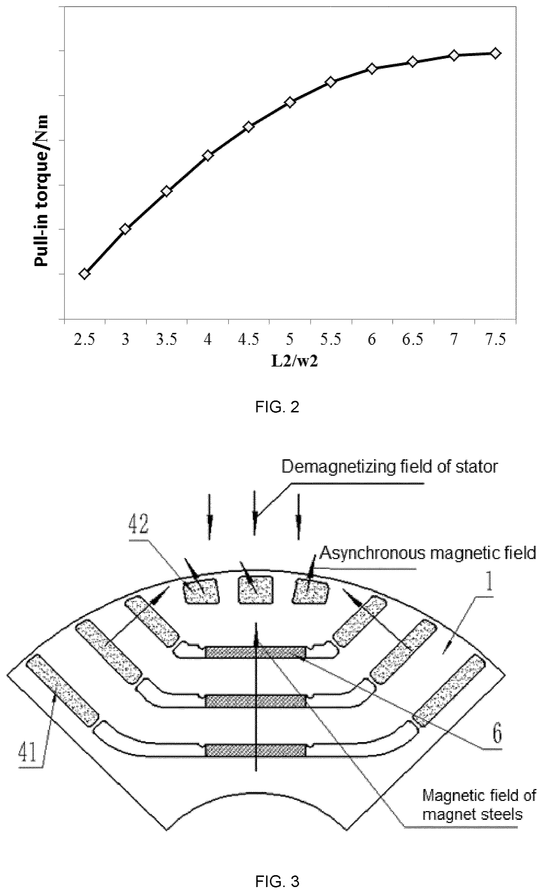

FIG. 2 illustrates a diagram showing a relationship curve of L2/w2 of a rotor structure vs a pull-in torque according to embodiments of the present invention. Under the same operating conditions, when w2 remains unchanged, the pull-in torque increases gradually as L2 increases. When L2 increases to a certain extent, a rate of increase in pull-in torque decreases significantly. When the ratio of L2 to w2 satisfies 3≤L2/w257, a large pull-in torque is able to be achieved while the conductor slots are reasonably arranged, thereby more effectively improving the starting capability of the motor. With reference to FIG. 2, the motor according to the embodiments of the present invention is more easily pulled into synchronous stable operation.

In one embodiment, each of the magnet steels 6 has a length L1 in a direction perpendicular to the d-axis. A ratio L2/L1 of the length L2 of the q-axis conductor slots 41 along the q-axis to the length L1 of a corresponding magnet steel 6 on the same layer in the direction perpendicular to the d-axis is equal to k2. Along a direction toward the rotor outer circumference in the d-axis, k2 decreases gradually.

In one embodiment, the length L2 of at least part of the q-axis conductor slots 41 along the q-axis is greater than more than 0.8 times the length L1 of the magnet steels 6 on the same layer in the direction perpendicular to the d-axis. This arrangement is able to enhance the protective effect of the squirrel-cage magnetic field on the magnet steels 6. The magnet steels 6 are protected with the magnetic field generated by the structure of the conductor slots, avoiding the magnet steels 6 from demagnetizing during a starting process.

In one embodiment, each of the magnet steels 6 has a width w1 along the d-axis; and a relationship between the width w2 of the q-axis conductor slots 41 along the direction perpendicular to the q-axis and the width w1 of the magnet steels 6 on the same layer along the d-axis satisfies w2>w1.

In one embodiment, a relationship between w1 and w2 meets 1.2≤w2/w1≤2.

A thickness dimension of the q-axis conductor slots 41 is optimally designed such that the thickness of the q-axis conductor slots 41 and a thickness of the permanent magnet slots 5 are within a set range, thereby further enhancing the protective effect of the squirrel-cage magnetic field generated by the conductor slots on the magnet steels 6 while ensuring an increased pull-in torque of the motor with a certain area of conductor slots.

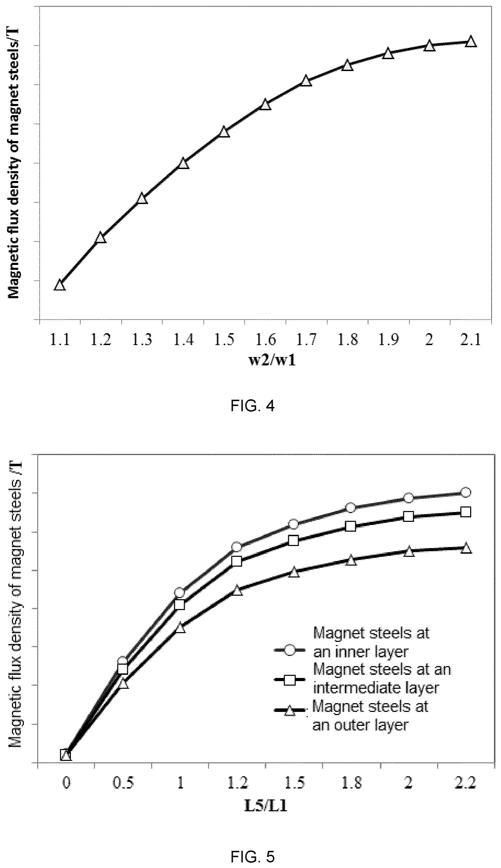

FIG. 3 illustrates a schematic diagram of demagnetization improvement of magnet steels with an asynchronous magnetic field of a rotor structure according to embodiments of the present invention. Referring to FIG. 4, a curve of a relationship between magnetic flux density of magnet steels and w2 / w1 in a rotor structure according to an embodiment of the present invention is shown. Under the same operating conditions, when w1 remains constant, the remanence of the magnet steels increases as w2 increases. When w2/w1 meets 1.2≤w2/w1≤2, irreversible demagnetization of the magnet steels during the starting process is able to be avoided while increasing the utilization ratio of the magnet steels.

In one embodiment, a minimum width of a magnetic conduction channel between two q-axis conductor slots 41 adjacent to the q-axis in the direction perpendicular to the q-axis is q1, a minimum value of widths of magnetic conduction channels between all the adjacent q-axis conductor slots 41 on the same side of the q-axis in the direction perpendicular to the q-axis is qz, and q1<qz.

In this embodiment, a dimension of the magnetic conduction channel in the direction perpendicular to the q-axis is a width dimension. Taking three magnetic conduction channels as an example, the minimum widths of the three magnetic conduction channels along the direction away from the q-axis are q1, q2, and q3 respectively, wherein q1 is smaller than the smaller one of the minimum widths of the other two magnetic conduction channels, i.e., q1<min(q2, q3).

Under the same pole, along the direction away from the q-axis, the widths of the magnetic conduction channels in the direction perpendicular to the q-axis decrease gradually.

Taking three magnetic conduction channels as an example, distinguished according to their distances from the q-axis, the magnetic conduction channels are a first magnetic conduction channel, a second magnetic conduction channel, and a third magnetic conduction channel, respectively, wherein the q-axis passes through the first magnetic conduction channel, and the minimum width q1 of the first magnetic conduction channel is the smallest. For the other two magnetic conduction channels than the first magnetic conduction channel, the minimum width q2 of the second magnetic conduction channel close to the q-axis is greater than or equal to the minimum width q3 of the third magnetic conduction channel away from the q-axis, i.e., q2≥q3. This arrangement prevents the magnetic conduction channels between the magnet steels 6 from being overloaded, avoids rotor saturation, and maximizes the magnet steel torque and the reluctance torque, while reducing the motor harmonics.

In one embodiment, under the same pole, a magnetic conduction channel between adjacent q-axis conductor slots 41 has a minimum width qn in the direction perpendicular to the q-axis, a magnetic conduction channel between adjacent permanent magnet slots 5 corresponding to the adjacent q-axis conductor slots 41 has a minimum width dz along the d-axis, and 0.9qn≤dz≤1.35qn.

In this embodiment, three magnetic conduction channels are taken as an example, wherein a relationship between the minimum width q2 of the second magnetic conduction channel and the minimum width d2 of the magnetic conduction channel between two permanent magnet slots 5 corresponding to two q-axis conductor slots 41 on both sides of the second magnetic conduction channel meets 0.9*q2≤d2≤1.35*q2, and a relationship between the minimum width q3 of the third magnetic conduction channel and the minimum width d3 of the magnetic conduction channel between two permanent magnet slots 5 corresponding to two q-axis conductor slots 41 on both sides of the third magnetic conduction channel meets 0.9*q3≤d3≤1.35*q3. The purpose of this arrangement is to ensure a sufficient width between the permanent magnet slots 5 to prevent magnetic saturation which would otherwise affect the magnetic flux circulation in the channels between the permanent magnet slots 5 and the output of magnet steel torque.

In one embodiment, each conductor slot 4 is a closed slot and is filled with a conductive and non-magnetic material; and/or, on the cross section perpendicular to the central axis of the rotor core 2, the conductor slot 4 includes an arc segment and/or a straight segment. The shape of the conductor slot 4 may be rectangular, quasi-rectangular, or irregularly polygonal. The purpose of the conductor slot 4 is to fill with the conductive and non-magnetic material to form a squirrel-cage structure for achieving self-starting of the motor.

In one embodiment, under the same pole, a number of the d-axis conductor slots 42 on a side of the magnet steels 6 close to the rotor outer circumference is at least two, and a total length L5 of all the d-axis conductor slots 42 in a direction perpendicular to the d-axis is greater than a length L1 of the magnet steels 6 in the direction perpendicular to the d-axis. Each d-axis conductor slot 42 has a first side edge that is farthest from the d-axis on a first side of the d-axis and a second side edge that is farthest from the d-axis on a second side of the d-axis, wherein the total length L5 is a maximum distance between the first side edge and the second side edge in the direction perpendicular to the d-axis.

In one embodiment, 1.2≤L5/L1≤2.

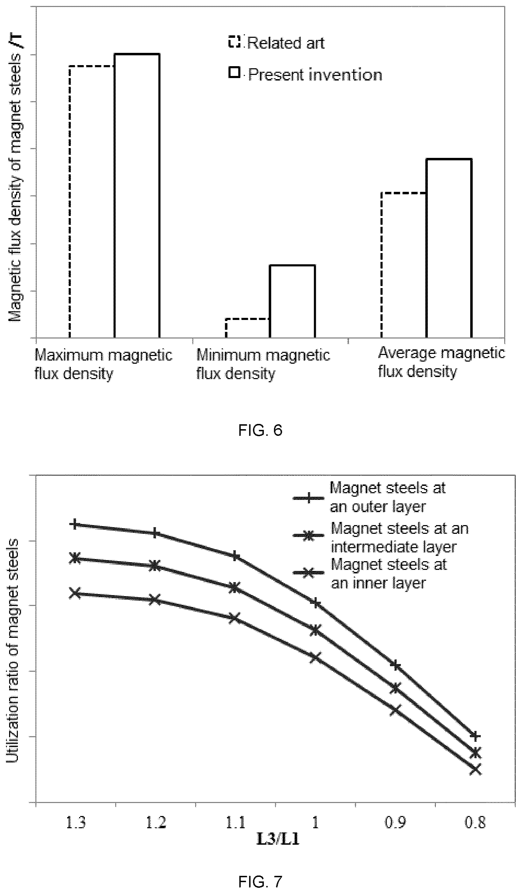

FIG. 5 illustrates a diagram showing a relationship curve of a magnetic flux density of each layer of magnet steels of a rotor structure vs L5/L1 according to embodiments of the present invention. Under the same operating conditions, when L1 remains constant, the remanence of the magnet steels increases as L5 increases; and when L5/L1 meets 1.2≤L5/L1≤2, irreversible demagnetization of the magnet steels during the starting process is able to be avoided while increasing the utilization ratio of the magnet steels, thereby enhancing the starting demagnetization performance of the motor. FIG. 6 illustrates a comparison diagram of different magnetic flux densities of magnet steels of a motor according to embodiments of the present invention and a motor of the related art. Under the same operating conditions, the motor according to the embodiments of the present invention is able to increase both the maximum and minimum magnetic flux densities of the magnet steels during the starting process, while reducing the difference between the maximum and minimum magnetic flux densities, thereby improving the stability of the magnet steels during the starting process.

**In** one embodiment, a spacing between adjacent d-axis conductor slots 42 has a minimum width w4 in the direction perpendicular to the d-axis, the magnet steels 6 have a width w1 along the d-axis, and w4≥2w1; and/or, a relationship between a maximum width w5 of the d-axis conductor slots 42 in the d-axis and the width w1 of the magnet steels 6 along the d-axis meets w5≥2w1.

The d-axis conductor slots 42 of a certain size is not only able to improve the starting capability of the motor but also enhance the protection for the magnet steels 6. The width between the d-axis conductor slots 42 ensures a certain magnetic conduction channel width, allowing part of the magnetic field from the magnet steels 6 to enter the d-axis, thereby increasing the magnet steel torque.

In one embodiment, each layer of permanent magnet slots 5 extends from the d-axis as a symmetry center to both sides of the d-axis to the q-axis conductor slots 41. Each permanent magnet slot 5 is composed of arc segments and/or straight segments. On the cross section perpendicular to the central axis of the rotor core 2, the permanent magnet slots 5 are symmetric about the d-axis; each of the permanent magnet slots 5 includes arc segments and/or straight segments, and includes a middle portion perpendicular to the d-axis and end portions parallel to the q-axis; each of the magnet steels 6 is disposed at a middle portions of a corresponding e permanent magnet slot 5; and portions of the permanent magnet slots 5 at both ends of the magnet steels 6 are filled with air.

In one embodiment, a width of part of the middle portion at two ends of a corresponding magnet steel 6 gradually increases, in a direction away from the corresponding magnet steel 6, from the two ends of the corresponding magnet steel 6 toward a junction with the two end portions, to reach a width of the two end portions at the junction.

In one embodiment, the middle portion at two ends of the magnet steel 6 has a minimum width w3 along the d-axis, the magnet steel 6 has a width w1 along the d-axis, and w3 ≥ w1.

The configuration above allows a reasonable arrangement of the magnet steels and the permanent magnet slots, maximizing the use of an area of the magnetic lamination. This is able to avoid magnetic saturation, reduce the amount of magnet steel material, enhance the utilization rate of the magnet steels, and also increase the magnet steel torque and reluctance torque, thereby enhancing the torque output capability.

In one embodiment, the end portions have a maximum width w6 in the direction perpendicular to the q-axis, that is, the air portions of the permanent magnet slots 5 have a maximum thickness w6, wherein the relationship between w2 and w6 meets 0.8w2≤w6≤1.1w2.

In one embodiment, 0.9w2≤w6≤w2.

With this arrangement, the magnetic conduction channels between the permanent magnet slots 5 are able to be avoided from becoming excessively narrow, which would otherwise cause reduction in motor output and decrease in motor efficiency.

In one embodiment, in the direction perpendicular to the d-axis, a length of an air portion of a permanent magnet slot 5 located at an end of a corresponding magnet steel 6 gradually decreases along the d-axis toward the rotor outer circumference.

In one embodiment, in the direction perpendicular to the d-axis, the length of the air portion of the permanent magnet slot 5 located at the end of the corresponding magnet steel 6 is L3, a length of the corresponding magnet steel 6 in a same layer is L1, with L3 / L1 = k3, and k3 gradually decreases toward the rotor outer circumference.

FIG. 7 illustrates a diagram showing a relationship curve of a utilization ratio of each layer of magnet steels of a rotor structure vs L3/L1 according to embodiments of the present invention. Under the same operating condition, when L1 remains constant, the utilization ratio of the magnet steels decreases as L3 decreases. Compared with the multiple layers of magnet steels under one pole, the outermost layer exhibits the relatively highest utilization ratio.

In one embodiment, at least part of the permanent magnet slots 5 is provided with the air portion at the end of the corresponding magnet steel 6, and the length L3 of the air portion in the direction perpendicular to the d-axis is greater than the length L1 of the corresponding magnet steel 6 in the same layer in the direction perpendicular to the d-axis.

With the definition hereinabove, the number of magnet steels used is able to be reduced, and the utilization ratio of the magnet steels is able to be increased.

In one embodiment, an air portion of each permanent magnet slot 5 at one end of the magnet steel 6 has a length L3 in the direction perpendicular to the d-axis, each q-axis conductor slot 41 on the same layer has a length L2 along the q-axis, and a ratio of L3 to L2 decreases gradually along a direction toward the rotor outer circumference.

In one embodiment, at least a permanent magnet slot 5 in an innermost layer has an air portion at the end of the magnet steels 6 with a length L3, the length L3 is greater than the length L2 of the corresponding q-axis conductor slot 41 in the same layer along the q-axis direction.

In one embodiment, the length L3 of the air portion of the permanent magnet slot 5 at an outermost layer along the d-axis at one end of the magnet steel 6 is less than the length L2 of the q-axis conductor slot 41 on the same layer along the q-axis.

In one embodiment, 0.35≤L3/L2≤0.8.

With this arrangement, a sufficient area of the conductor slots is able to be ensured, and the starting capability of the motor is able to be improved, while protecting the magnet steels from demagnetization.

In one embodiment, each of the magnet steels 6 have a length L1 in the direction perpendicular to the d-axis, and a total length of a permanent magnet slot 5 in a same layer as a corresponding magnet steel 6 in the direction perpendicular to the d-axis is L4, and a ratio k4 between L1 and L4 gradually increases toward the rotor outer circumference.

In one embodiment, a ratio k4 between the length L1 of the magnet steel 6 at an innermost layer along the d-axis and the length L4 of the permanent magnet slot 5 on the same layer satisfies 0.2≤k4≤0.4, and along the direction toward the rotor outer circumference, an increase ratio of k4 for an adjacent layer is greater than or equal to 1.25.

The purpose of this arrangement is to reduce the number of magnet steels used and increase the utilization ratio of the magnet steels.

In one embodiment, under the same pole, the magnet steels 6 are arranged in two or more layers, wherein the width of the magnet steel 6 at the outermost layer in the d-axis is greater than or equal to the width of the magnet steels 6 at other layers in the d-axis, and the difference between the lengths L1 of the magnet steels 6 at each layer in the direction perpendicular to the d-axis is within 30%. The purpose of this arrangement is to ensure that the magnet steels do not demagnetize while guaranteeing the number of magnet steels used at each layer, thereby avoiding localized protection and low utilization ratio of the magnet steels.

In one embodiment, a minimum distance of the magnet steels 6 at the outermost layer on a side close to the rotor outer circumference from the rotor outer circumference is r1, a radius of the rotor outer circumference is R, and 0.18≤r1/R≤0.33.

In one embodiment, the q-axis conductor slots 41 have a length L2 along the q-axis, and the length L2 of the q-axis conductor slots 41 at the outermost layer close to the rotor outer circumference meets 1 <r1/L2<2.

The minimum distance between the magnet steel at the outermost layer and the rotor outer circumference determines the size of the rotor end ring. Ensuring a certain size of the rotor end ring is able to reduce pressure deformation of the rotor end ring and rotor core during manufacturing. The rotor end ring covers the conductor slots to achieve short-circuiting. The conductor slots generate asynchronous torques during motor starting to enable motor starting.

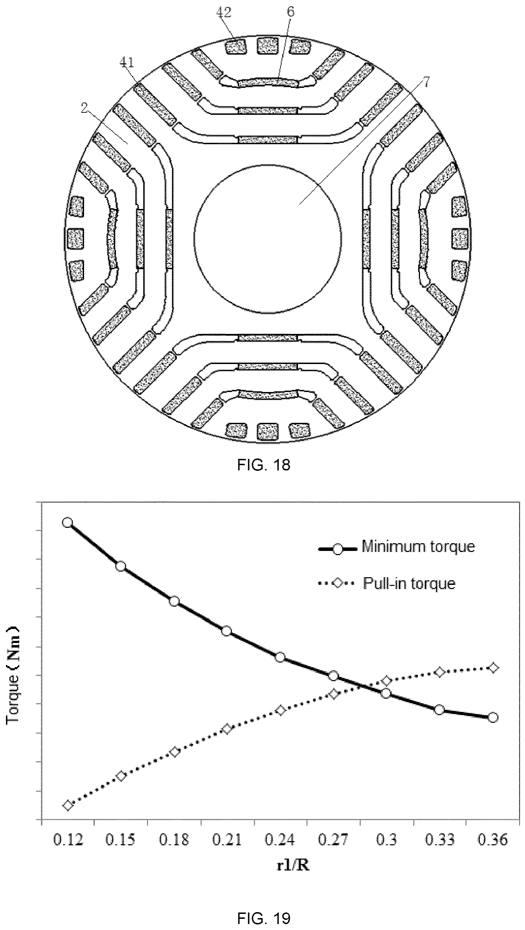

FIG. 19 illustrates a diagram showing a relationship curve of a minimum torque and a pull-in torque of a rotor structure vs r1/R according to embodiments of the present invention. Under the same operating conditions, when R remains constant, as r1 increases, the minimum torque exhibits a decreasing trend while the pull-in torque exhibits an increasing trend. A minimum torque that is too small cannot drive the load, and a pull-in torque that is too small makes it difficult for the motor to pull into synchronous speed operation. When r1/R meets the condition 0.18≤r1/R≤0.33, the starting and stable operation of the motor is able to be improved, and the risk of demagnetization of the magnet steels during the starting process is able to be reduced.

In one embodiment, a middle portion of the magnet steel 6 at the outermost layer close to the rotor outer circumference protrudes toward the rotor outer circumference. In this embodiment, the magnet steel has a rectangular or quasi-rectangular shape. The magnet steel at the outermost layer close to the outer periphery of the rotor is able to be configured to have an arched or inverted V-shaped shape to increase the minimum distance r1 between the magnet steel at the outermost layer and the outer periphery of the rotor, thereby further ensuring the manufacturability and starting capability of the motor.

In one embodiment, a distance between a side of the conductor slot 4 close to the rotor outer circumference and the rotor outer circumference is d4, and a distance between a side of the q-axis conductor slot 41 close to the permanent magnet slot 5 and the permanent magnet slot 5 on the same layer is d5, wherein 0<d4≤1.75*d and 0<d5≤1.75*d, d being a thickness of an air gap between an inner circle of the stator and the rotor outer circumference. With this arrangement, not only may the mechanical strength of part of the rotor structure be ensured, but also magnetic flux leakage between the conductor slots and the magnet steels are able to be reduced, thereby improving the motor efficiency.

In one embodiment, end plates are disposed at both ends of the rotor core 2. The end plates are made of the same material as the magnetic conductive laminations 3 of the rotor core 2 but have different structures. The end plates are provided with communication slots structurally adapted to the conductor slots 4 correspondingly to the conductor slots 4. The end plates cover both end portions of the permanent magnet slots 5, and the end plate on at least one end of the rotor core 2 covers a portion of the magnet steel 6 at the outermost layer close to the rotor outer circumference. The end plate is capable of increasing the minimum distance from the magnet steel at the outermost layer to the rotor outer circumference, thereby enlarging the area of the rotor end ring, improving the starting of the motor, and preventing demagnetization of the magnet steel.

In one embodiment, the rotor structure further includes a short-circuit end ring 9 which covers and short-circuits the conductor slots 4. The short-circuit end ring 9 has a circular outer periphery and includes an end ring inner hole which is a polygon defined by straight segments or a polygon defined by straight segments and arc segments. Under the same pole, the short-circuit end ring 9 has different radial widths at different positions of a region from the d-axis to the q-axis. A relationship between a minimum radial width r2 of the short-circuit end ring 9 and the radius R of the rotor outer circumference meets 0.14≤r2/R≤0.3. With this arrangement, a certain radial width of the end ring is able to be ensured and the starting capability of the motor is able to be improved. Meanwhile, the end ring in the d-axis also helps improve the anti-demagnetization capability of the motor.

In one embodiment, the rotor structure further includes a short-circuit end ring 9. Both ends of the rotor core 2 are provided with end plates. The end plates are provided with communication slots structurally adapted to the conductor slots 4 correspondingly to the conductor slots 4. The end plates cover both end portions of the permanent magnet slots 5, wherein the end plate at one end covers a portion of the magnet steel 6 at the outermost layer close to the rotor outer circumference, while the end plate at the other end is located radially outward of the magnet steel 6 at the outermost layer close to the rotor outer circumference. The short-circuit end ring 9 is disposed on the end plate and covers the communication slot. A structure of the short-circuit end ring 9 is adapted to a structure of an end plate of a corresponding end. The relationship between the minimum radial width r2 of the short-circuit end ring 9 and the radius R of the rotor outer circumference meets 0.14≤r2/R≤0.3, thereby ensuring that the rotor structure has an end ring with a certain area, which helps improve the starting capability of the motor and prevents demagnetization of the magnet steels.

In this embodiment, the end plates include a first end plate 101 and a second end plate 102, and the short-circuit end rings 9 include a first end ring 111 and a second end ring 112, wherein the first end plate 101 covers both end portions of the permanent magnet slot 5 without covering the magnet steel 6 at the outermost layer such that the magnet steel 6 is entirely located outside the first end plate 101; the second end plate 102 covers the permanent magnet slot 5 and part of the magnet steels 6 at the outermost layer so as to increase the minimum distance from the magnet steel at the outermost layer to the rotor outer circumference, enlarge the area of the rotor end ring, improve motor starting, and prevent demagnetization of magnet steels. The structure of the first end ring 111 is adapted to the first end plate 101 and completely covers the first end plate 101, and the structure of the second end ring 112 is adapted to the second end plate 102 and completely covers the second end plate 102.

In the manner hereinabove, the end plates and the end rings at both ends of the rotor core 2 may have different structures, respectively, so that the design flexibility and applicability of the rotor structure is able to be improved.

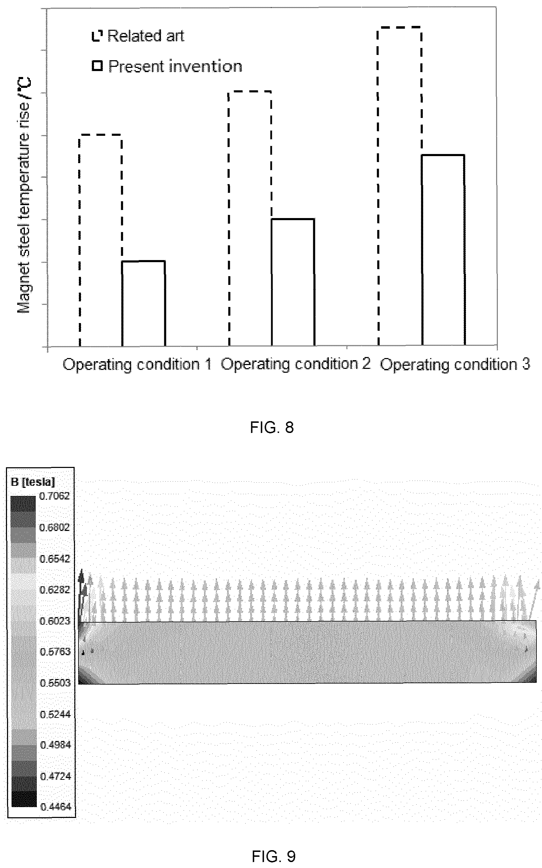

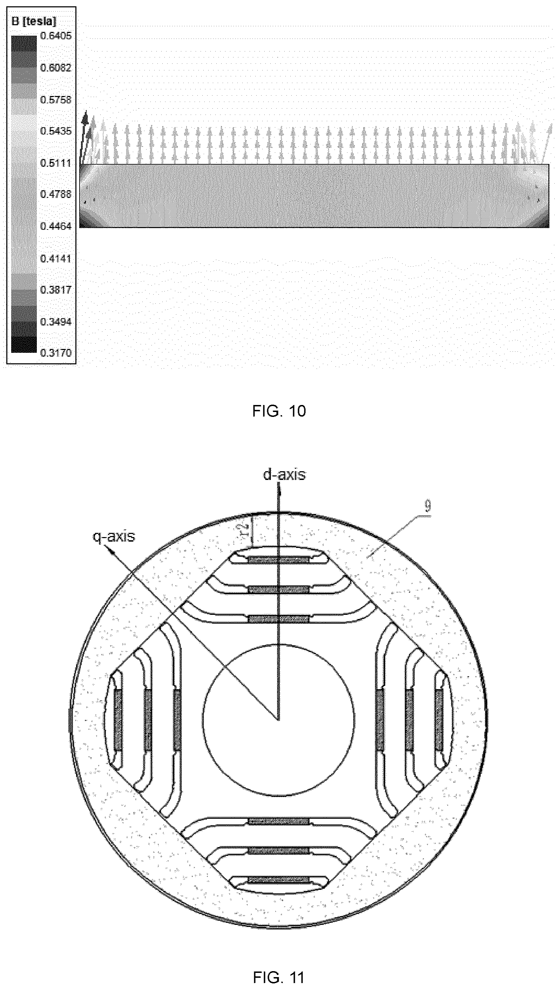

Referring to FIG. 8, a comparison diagram of temperature rise of magnet steels under different operating conditions between a motor according to an embodiment of the present invention and a motor of the related art is shown. Under the same operating condition, compared with the prior art, the technology of the present invention is able to reduce the temperature rise by at least 20%, thereby mitigating the potential problem of demagnetization of the magnet steels due to high temperatures under heavy load. Referring to FIGS. 9 and 10, the technology of the present invention is able to address problems such as demagnetization of the magnet steels under high temperature rise during heavy load. Referring to FIG. 9, the motor according to the technology of the present invention exhibits low magnetic field harmonics and eddy current losses, improved heat dissipation, during motor operation, the magnet steels have low temperature rise and high magnetic flux density, and enhanced demagnetization resistance of the magnet steels.

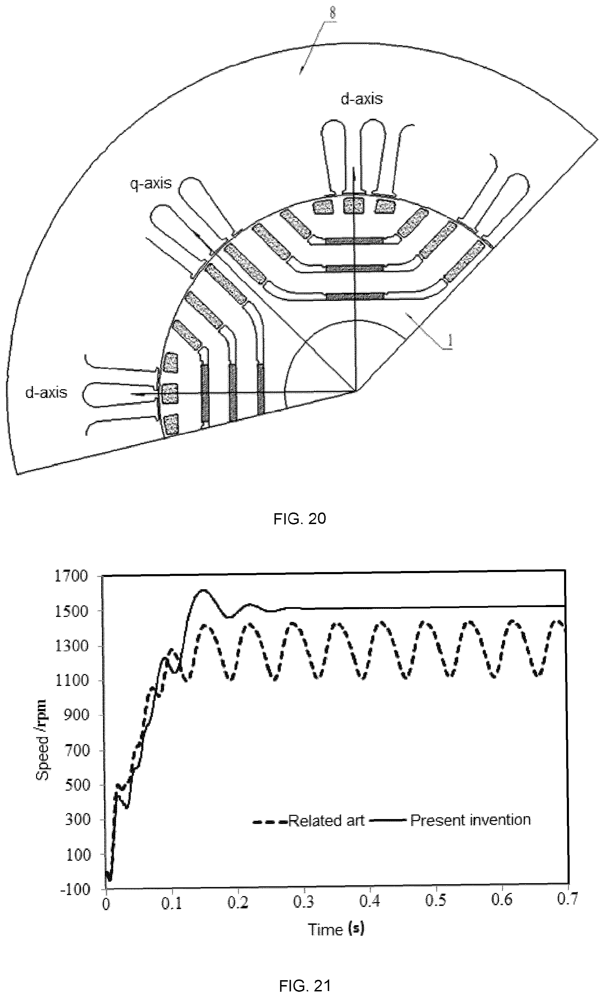

Referring to FIG. 21, a comparison diagram of rotational speeds during starting process between a motor according to an embodiment of the present invention and a motor of the related art is shown. It can be seen from the drawing that, compared with the motor of the related art, the motor of the embodiments of the present invention is more easily able to achieve synchronous pull-in and stable operation, exhibiting stronger starting synchronism.

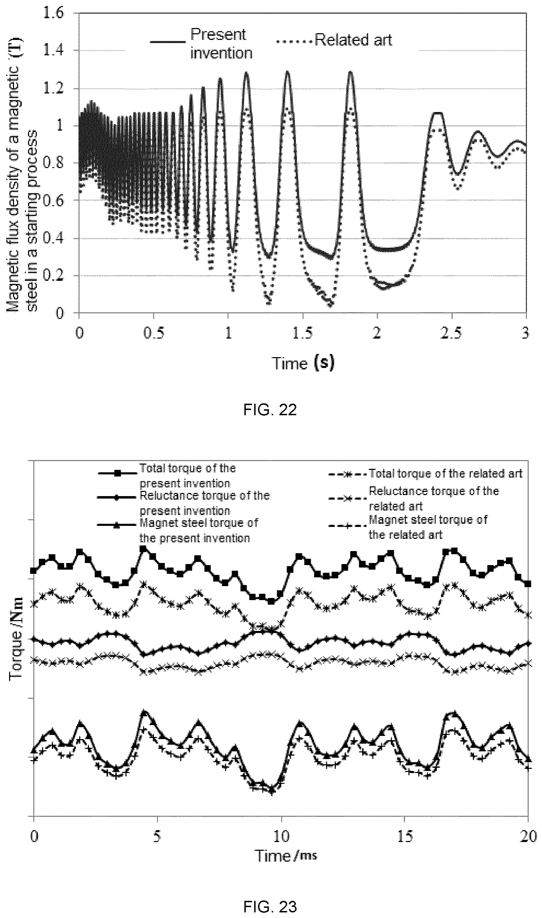

Referring to FIG. 22, a comparison diagram of magnetic flux density of magnet steels during starting process between a motor according to an embodiment of the present invention and a motor of the related art is shown. It can be seen from the drawing that, compared with the motor of the related art, in the motor of the embodiments of the present invention, the magnet steels have higher magnetic flux density and stronger demagnetization resistance.

Referring to FIG. 23, a comparison diagram of various torques between a motor according to an embodiment of the present invention and a motor of the related art is shown. Under the same operating condition, all torques of the motor of the present invention are increased compared with the prior art, resulting in higher total torque and stronger output performance.

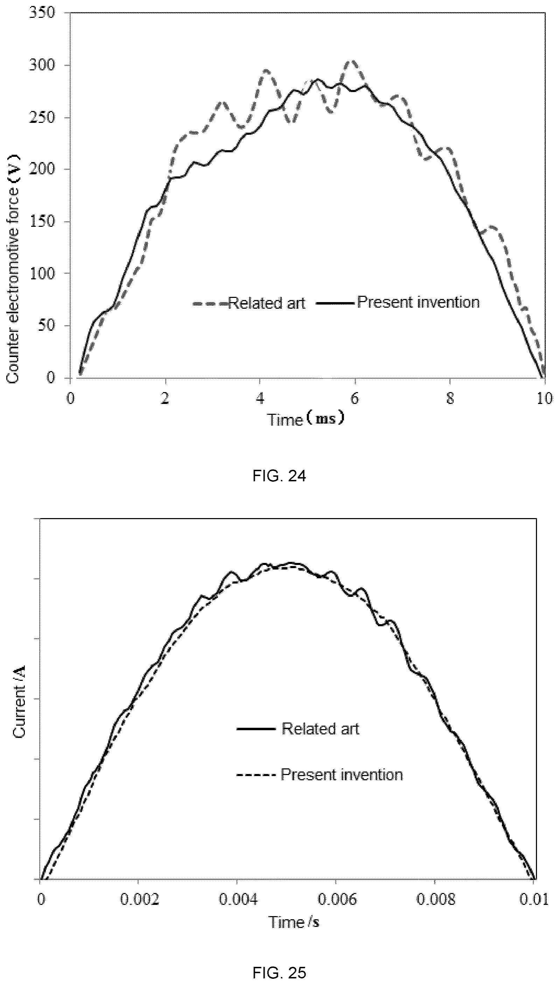

Referring to FIG. 20, a schematic diagram of a mating structure between a rotor structure and a stator structure of a motor according to an embodiment of the present invention is shown. FIGS. 24 to 26 show a comparison diagram of back electromotive force waveforms, a comparison diagram of current waveforms, and a comparison diagram of harmonic amplitudes between a motor according to an embodiment of the present invention and a motor of the related art, respectively. The technology of the present invention exhibits more sinusoidal back electromotive force waveforms and current waveforms with lower harmonic amplitudes, which is able to improve motor harmonics and reduce vibration and noise.

**It** is to be noted that the terms used herein are for describing specific embodiments only and are not intended to limit the exemplary embodiments according to the present invention. As used herein, unless the context clearly indicates otherwise, the singular form is also intended to comprise the plural form. In addition, it is to be understood that when the terms "include" and/or "comprise" are used in this description, the terms indicate the presence of features, steps, operations, devices, assemblies, and/or combinations thereof.

It is to be noted that the terms used herein are for describing specific embodiments only and are not intended to limit the exemplary embodiments according to the present invention. As used herein, unless the context clearly indicates otherwise, the singular form is also intended to comprise the plural form. In addition, it is to be understood that when the terms "include" and/or "comprise" are used in this description, the terms indicate the presence of features, steps, operations, devices, assemblies, and/or combinations thereof.

It is to be noted that the terms "first", "second", and the like in the description, claims, and drawings hereinabove of the present invention are used to distinguish similar objects, and are not necessarily used to describe a specific order or sequence. **It** is to be understood that the data used herein may be interchanged under appropriate circumstances, so that the embodiments of the present invention described herein can be implemented in sequences other than those illustrated or described.

The embodiments described above are merely some embodiments of the present invention and are not intended to limit the present invention. Various modifications and variations can be made by those skilled in the art. Any modification, equivalent substitution, improvement and the like made within the spirit and principle of the present invention shall all fall in the protection scope of the present invention.

## Claims

1. A permanent magnet assisted synchronous reluctance motor, comprising a stator structure (8) and a rotor structure (1), the stator structure (8) being sleeved outside the rotor structure (1) and forming an air gap with the rotor structure (1);
wherein the rotor structure comprises:
a rotor core (2) comprising a plurality of axially stacked magnetic conductive laminations (3), a plurality of conductor slots (4) and a plurality of layers of permanent magnet slots (5) being formed under one pole of the rotor core (2) and the plurality of conductor slots (4) being distributed along an outer periphery of the rotor core (2); and
magnet steels (6) disposed in the plurality of layers of the permanent magnet slots (5);
the rotor core (2) comprises a d-axis and a q-axis; under one pole, the d-axis is located on a symmetric centerline of the pole and the q-axis is located on a symmetric centerline between two adjacent poles; the plurality of layers of the permanent magnet slots (5) are arranged at intervals along the d-axis; the plurality of conductor slots (4) comprise d-axis conductor slots (42) and q-axis conductor slots (41); the d-axis conductor slots (42) are located on a side of the magnet steels (6) close to a rotor outer circumference of the rotor core (2), and the q-axis conductor slots (41) are located at two ends of each of the plurality of layers of the permanent magnet slots (5) and extend along an extension direction of the ends of each of the plurality of layers of the permanent magnet slots (5) close to the q-axis conductor slots (41);
the stator structure (8) comprise a stator core being provided with a plurality of stator teeth and stator slots which are uniformly distributed in an alternating arrangement; and when any d-axis centerline of the rotor structure (1) is aligned with a stator tooth centerline of the stator structure (8), a d-axis centerline adjacent to the d-axis centerline is aligned with a stator slot centerline, and a q-axis centerline adjacent to the d-axis centerline is staggered with the stator tooth centerline or the stator slot centerline.

2. The permanent magnet assisted synchronous reluctance motor according to claim 1, wherein the q-axis conductor slots (41) have a length L2 along the q-axis and a width w2 along a direction perpendicular to the q-axis; along a direction away from the q-axis, L2 decreases gradually and a ratio L2/w2 of L2 to w2 decreases gradually; a relationship between the length L2 of at least part of the q-axis conductor slots (41) along the q-axis and a radius R of the rotor outer circumference meets 0.15≤L2/R≤0.35.

3. The permanent magnet assisted synchronous reluctance motor according to claim 1, wherein 3≤L2/w2≤7.

4. The permanent magnet assisted synchronous reluctance motor according to claim 1, wherein the magnet steels (6) have a width w1 along the d-axis; and a relationship between a width w2 of two q-axis conductor slots (41) in the q-axis conductor slots along a direction perpendicular to the q-axis and a width w1 of a corresponding magnet steel (6) on a same layer along the d-axis meets w2>w1.

5. The permanent magnet assisted synchronous reluctance motor according to claim 4, wherein a relationship between w1 and w2 satisfies 1.2≤w2/w1≤2.

6. The permanent magnet assisted synchronous reluctance motor according to claim 1, wherein a minimum width of a magnetic conduction channel between two q-axis conductor slots (41) adjacent to the q-axis in the direction perpendicular to the q-axis is q1, a minimum value of widths of magnetic conduction channels between all the adjacent q-axis conductor slots (41) on a same side of the q-axis in the direction perpendicular to the q-axis is qz, and q1<qz.

7. The permanent magnet assisted synchronous reluctance motor according to claim 6, wherein under the same pole, along a direction away from the q-axis, widths of magnetic conduction channels in the direction perpendicular to the q-axis decrease gradually.

8. The permanent magnet assisted synchronous reluctance motor according to claim 1, wherein under the same pole, a magnetic conduction channel between adjacent q-axis conductor slots (41) has a minimum width qn in the direction perpendicular to the q-axis, a magnetic conduction channel between adjacent permanent magnet slots (5) corresponding to the adjacent q-axis conductor slots (41) has a minimum width dz along the d-axis, and 0.9qn≤dz≤1.35qn.

9. The permanent magnet assisted synchronous reluctance motor according to claim 1, wherein under the same pole, a number of the d-axis conductor slots (42) located on the side of the magnet steels (6) close to the rotor outer circumference is at least two, and a total length L5 of all the d-axis conductor slots (42) in a direction perpendicular to the d-axis is greater than a length L1 of each of the magnet steels (6) in the direction perpendicular to the d-axis.

10. The permanent magnet assisted synchronous reluctance motor according to claim 9, wherein 1.2≤L5/L1≤2.

11. The permanent magnet assisted synchronous reluctance motor according to claim 1, wherein a spacing between two adjacent d-axis conductor slots (42) in the direction perpendicular to the d-axis is w4, and a width of each of the magnet steels (6) along the d-axis is w1, with w4 ≥ 2w1; and/or, a relationship between a maximum width w5 of the d-axis conductor slots (42) in the d-axis and the width w1 of each of the magnet steels (6) along the d-axis satisfies w5 ≥ 2w1.

12. The permanent magnet assisted synchronous reluctance motor according to claim 1, wherein in a cross-section perpendicular to a central axis of the rotor core (2), the plurality of layers of the permanent magnet slots (5) are symmetric about the d-axis, each of the plurality of layers of permanent magnet slots (5) comprises an arc segment and/or a straight segment and comprises a middle portion perpendicular to the d-axis and two end portions parallel to the q-axis, each of the magnet steels (6) is disposed in a middle portion of a corresponding permanent magnet slot (5), and portions of the corresponding permanent magnet slot (5) at two ends of the each of the magnet steels (6) are filled with air.

13. The permanent magnet assisted synchronous reluctance motor according to claim 12, wherein a width of part of the middle portion at two ends of a corresponding magnet steel (6) gradually increases from two ends of the corresponding magnet steel (6) in a direction away from the corresponding magnet steel (6) toward a junction with the two end portions to reach a width of the two end portions at the junction.

14. The permanent magnet assisted synchronous reluctance motor according to claim 13, wherein a maximum width of the two end portions in the direction perpendicular to the q-axis is w5, wherein a relationship between w2 and w5 meets 0.8w2≤w6≤1.1w2.

15. The permanent magnet assisted synchronous reluctance motor according to claim 12, wherein an air portion of each of the plurality of the permanent magnet slots (5) at an end of a corresponding magnet steel (6) has a length L3 in the direction perpendicular to the d-axis, each q-axis conductor slot (41) on the same layer has a length L2 along the q-axis, and a ratio of L3 to L2 decreases gradually along a direction toward the rotor outer circumference.

16. The permanent magnet assisted synchronous reluctance motor according to claim 15, wherein a length L3 of an air portion of at least a permanent magnet slot (5) at an innermost layer at the end of the corresponding magnet steel (6) is greater than the length L2 of the q-axis conductor slot (41) on the same layer along the q-axis.

17. The permanent magnet assisted synchronous reluctance motor according to claim 16, wherein a length L3 of an air portion of a permanent magnet slot (5) at an outermost layer along the d-axis at the end of the corresponding magnet steel (6) is less than the length L2 of the q-axis conductor slot (41) on the same layer along the q-axis.

18. The permanent magnet assisted synchronous reluctance motor according to claim 17, wherein 0.35≤L3/L2≤0.8.

19. The permanent magnet assisted synchronous reluctance motor according to claim 1, wherein each of the magnet steels (6) has a length L1 in the direction perpendicular to a d-axis, a corresponding permanent magnet slot (5) on a same layer as the each of the magnet steels (6) has a total length L4 in the direction perpendicular to the d-axis, and a ratio k4 of L1 to L4 increases gradually along a direction toward the rotor outer circumference.

20. The permanent magnet assisted synchronous reluctance motor according to claim 19, wherein a ratio k4 between a length L1 of a magnet steel (6) at an innermost layer along the d-axis and a length L4 of a corresponding permanent magnet slot (5) on the same layer meets 0.2≤k4≤0.4, and along the direction toward the rotor outer circumference, an increase ratio of k4 for an adjacent layer is greater than or equal to 1.25.

21. The permanent magnet assisted synchronous reluctance motor according to claim 1, wherein the rotor structure further comprises a short-circuit end ring (9) which covers and short-circuits the conductor slots (4); the short-circuit end ring (9) has a circular outer periphery and comprises an end ring inner hole which is a polygon defined by straight segments or a polygon defined by straight segments and arc segments; under the same pole, the short-circuit end ring (9) has different radial widths at different positions of a region from the d-axis to the q-axis; and a relationship between a minimum radial width r2 of the short-circuit end ring (9) and a radius R of the rotor outer circumference meets 0.14≤r2/R≤0.3.
